# EUROPEAN PATENT APPLICATION

(11) **EP 1 530 898 A1**
(43) Date of publication of application: **18.05.2005**
(21) Application number: 04026148.9
(22) Date of filing: 04.11.2004
(51) Int. Cl.: A01K 87/00

(54) **Carbon fiber fishing rod element crossed slidingly by a fishing line or elastic of any type**

(30) Priority: 06.11.2003 IT BO20030656
(71) Applicant: Pirazzini, Luca, 40123 Bologna (IT)
(72) Inventor: Pirazzini, Luca, 40123 Bologna (IT)
(74) Representative: Modiano, Guido, Dr.-Ing.

(57) **Abstract**

A carbon fiber fishing rod element (1) crossed slidingly by a portion of line (2) of any type, in which the internal surface converges toward the end where the line (2) exits and is constituted by a succession of slightly frustum-shaped portions (3a, 3b, 3c...), which gradually decrease in diameter, forming a plurality of steps (4a, 4b, 4c...) inside the element (1), against which the fishing line (2) slides when the rod is flexed downward, the fishing line being tensioned between the steps (4a, 4b), making contact in points instead of along the entire length of the cylindrical portions (3a, 3b, 3c...).

## Description

The present invention relates to a carbon fiber fishing rod element crossed slidingly by fishing line or fishing elastic of any type and to the method for providing the element; in particular, reference is made to the exit element for the elastic or line for the Roubaisienne-type fishing rod.

These rods are constituted by a plurality of tubular elements, which can reach a length of over 170 cm, are slightly frustum-shaped and can be mated one behind the other so as to form a rod that can reach a length of over fourteen meters; i.e., reference is being made to reel-equipped fishing rods in which the last element, or the last two elements, are crossed by the line, which is made of the material that is known by the trade-name Nylon but is often identified in the jargon of this field by the terms "filament" or "nylon line".

Roubaisienne rods are used to place with great precision the end of the element having the smallest diameter, known as tip, in the position in which one wishes the line with the hook and bait attached thereto to enter the water.

Rods of this type do not use a reel; they use instead an elastic provided with high extensibility characteristics, which is fitted inside the tip and, increasingly often, inside other elements that compose the rod element and is coupled to the base. The line is fixed to the other end of the elastic, which protrudes from the tip.

When a fish is caught, the elastic contrasts the escape of the prey with a force that gradually increases as the elongation of the elastic increases: if the angler keeps the tip aligned and orientated in the direction and with the orientation of the traction of the elastic, nothing contrasts the uniform elongation of the elastic along its entire length; if instead the tip is not aligned with the direction of traction, it bends increasingly, assuming a markedly arc-like configuration (a condition that is generally used to exploit the elasticity of the fishing rod in order to tire the fish more).

In this condition, the elastic inside the element slides against the internal wall of the tip, which is flexed downward: the sliding produces a certain friction and the elastic often elongates irregularly, with a jerking action, in the curved portion of the tip against which it slides.

The action performed by the reel in conventional rods is performed in this case by the elastic in combination with the orientation of the rod, by means of the downward flexing of the element and of the addition or removal of the portion of rod that is being held: by acting skilfully, it is possible to keep the fish in traction to tire it without loosening it too much (the fish would not tire) or too little (the fish would free itself from the hook).

The movement of the fish toward and away from the location of the angler is compensated by gradually adding or removing rod elements at the base of the elements that have already been assembled to form the rod.

It has been found that the sliding of the elastic against the flexed internal surface of the tip is not constant and often occurs with sudden jerking, making it difficult to grip the fish and possibly breaking the line.

These sliding difficulties are due to the friction of the elastic against the internal surface of the tip and of the entire element.

In order to try to avoid losing the fish, it has been proved that it is essential to render the elongation of the elastic more uniform and less sensitive to whether the elastic, in the configuration in which the element is flexed, is dry or wet: in order to obviate this drawback, it is known to resort to lubricants distributed on the line, but these lubricants are soon washed away, losing their effectiveness, and further tend to leave pasty residues inside the rod.

In fishing with reel-equipped rods in which the fishing line passes through the last portion of the rod and exits from the end of said rod, it has been found that especially when the line is wet, there is considerable friction between the line and the internal surface of the rod: to obviate this, end portions have been provided which arrange, in the portion of the rod that is crossed by the line, a plurality of applied rings or a spiral or helical springlike coil, made of various materials suitable to avoid the sliding of the line along the entire internal surface of the element through which it passes.

The aim of the present invention is to obviate the cited drawbacks and to meet the mentioned requirements, by providing an element for the exit of the elastic for a fishing rod of the Roubaisienne type that dispenses the elastic uniformly in any condition, whether dry or wet: for reel-equipped rods, the element according to the invention attempts to reduce the friction between the fishing line and the internal surface of the portion of rod that is crossed by the line.

Within this aim, an object of the present invention is to provide an element that is simple, relatively easy to provide in practice, safe in use, effective in operation, and has a relatively low cost.

This aim and this and other objects that will become better apparent hereinafter are achieved by the present carbon fiber fishing rod element crossed slidingly by a portion of line of any type, characterized in that its internal surface converges toward the line exit end and is constituted by a succession of portions, which gradually decrease in diameter, forming a plurality of steps inside the element, against which the fishing line slides when the rod is flexed downward, said fishing line being tensioned between the steps, making contact in points instead of along the entire length of said cylindrical portions.

The method for providing the element according to claim 1 is of the type that comprises the steps of winding in succession, on a frustum-shaped spindle, a plurality of layers of carbon fibers preimpregnated with thermosetting resins, in which the fibers are orientated in different ways in order to mutually cross the layers of fibers and obtain the intended mechanical characteristics of the element; bringing said spindle, with said layers wound thereon in the intended number and directions in order to provide the sought strength and light weight characteristics, to the polymerization temperature of said resin for a preset time; and removing the layers of resin thus bonded by extracting said frustum-shaped spindle, optionally after preliminary cooling, said spindle being no shorter than, and substantially as long as, the rod element that it has to provide, characterized in that the outer surface of said spindle is constituted almost entirely by a succession of cylindrical portions whose axial length depends on the length of the element to be provided, and on the variation in diameter between two successive portions, the difference in internal diameter between the two ends of the rod element being distributed by successive steps among the successive cylindrical portions.

Further characteristics and advantages of the present invention will become better apparent from the following detailed description of a preferred but not exclusive embodiment of a carbon fiber fishing rod element crossed slidingly by a fishing line of any type and of a method for providing the element according to the invention, illustrated by way of nonlimiting example in the accompanying drawings, wherein:
Figure 1 is an enlarged-scale sectional side view, taken along a diametrical plane, of a carbon fiber fishing rod element subjected to flexing and crossed slidingly by a fishing line of the extensible elastic type, according to the invention;
Figure 2 is an enlarged-scale sectional side view, taken along a diametrical plane, of a carbon fiber fishing rod element subjected to flexing and crossed slidingly by a fishing line of the type made of a material known by the trade-name Nylon, according to the invention;
Figure 3 is an enlarged-scale sectional side view, taken along a diametrical plane, of a carbon fiber fishing rod element;
Figure 4 is an enlarged-scale perspective view of a portion of the metallic spindle used to perform the method, with an indication of the arrangement of a layer of carbon fibers;
Figure 5 is an explanatory perspective view of the method for providing a fishing rod element according to the invention.

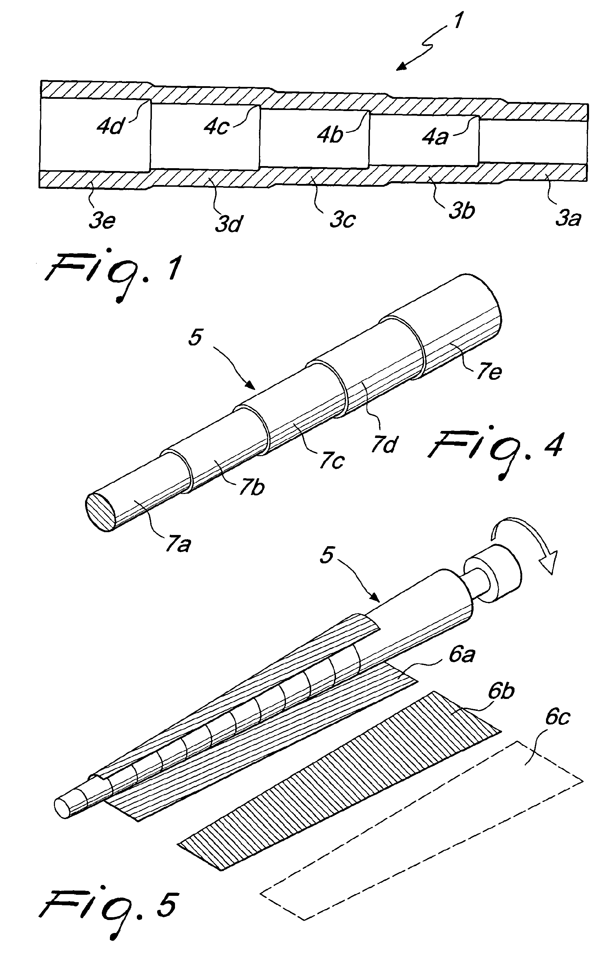

It should be noted that the elements shown in Figures 1, 2, 3, 4 and 5, are intentionally not to scale, in order to clarify their constructive characteristics.

With reference to the figures, the reference numeral 1 generally designates a carbon fiber fishing rod element crossed slidingly by a fishing line 2a or by an elastic 2b of any type: the internal surface of the rod converges toward the line exit end and is constituted by a succession of portions 3a, 3b, 3c..., which are cylindrical or slightly frustum-shaped and gradually decrease in diameter (portions 3a, 3b... are designated hereinafter simply as cylindrical portions, without altering the fact that they may also be frustum-shaped), providing a plurality of steps 4a, 4b, 4c... inside the element, against which, when the rod is flexed downward, the fishing line 2a (or the elastic 2b) slides and is taut between one step (for example 4a) and the next (for example 4b), without making contact along the entire length of the cylindrical portions (3a, 3b...). The steps 4a, 4b... are provided exclusively in the portion of the elements 1 that runs from its smaller-diameter end to a region located proximate to its bottom. This is done to ensure that the coupling of another rod element in its bottom is not hindered by the presence of the steps 4a, 4b..., which might interfere with its end surface.

For fishing rods of the telescopic type, the refinement of limiting the distribution of the steps 4a, 4b... is not necessary: it can be seen that these rods operate excellently both with steps 4a, 4b... that are distributed along the entire internal surface of the elements that constitute them and with steps distributed along just one part thereof.

The method for providing the element comprises a first step, during which a plurality of layers 6 of carbon fibers, preimpregnated with thermosetting resins, are wound in succession around a frustum-shaped spindle 5 so that their fibers are orientated in different manners, in order to mutually cross the layers 6 of fibers and obtain the chosen mechanical characteristics of the element.

The spindle 5 is not shorter than, and is substantially as long as, the rod element 1 that is to be provided by means of the spindle, and its outer surface is constituted by a succession of cylindrical portions 7a, 7b, 7c... whose axial length depends on the taper required for the element 1, in order to achieve the correct dynamic action of the fishing rod. Naturally, the cylindrical portions 7a, 7b,... of the spindle 5 are not distributed along its entire outer surface in order to ensure that the steps 4a, 4b... do not form in the bottom of the element 1, as described earlier.

If the variation in diameter between two successive portions 7a, 7b... is known (generally 1.2 mm or less, entailing therefore a maximum height of 0.6 mm of a step 4, with a preferred solution consisting of a variation of approximately 0.1 mm, which is matched by a height of 0.05 mm of the step 4), this variation is in fact kept generally constant in each spindle 5, and if the necessary taper of the element 1 and its length are also known, the axial length of each one of the portions 7a, 7b... is substantially determined (apart from any corrections dictated by particular embodiments). If the portions 7a, 7b.... are frustum-shaped (in order to constitute frustum-shaped portions 3a, 3b... on the element 1), the taper of each element affects (together with the other parameters listed above) its axial length (or optionally the variation in diameter between two successive portions 7a, 7b...).

The spindle 5, with the layers 6 wound thereon in the intended number and directions, in order to provide the sought strength and lightness characteristics, is brought to the polymerization temperature of the resin for a preset time. At the end of a step for resin cooling (which can be forced or natural), the frustum-shaped spindle 5 is removed by extracting it.

It should be noted that the steps 4a, 4b... provided along the internal surface of the element 1 are made of the same material as the element 1 and are obtained during the formation of the element 1, since no subsequent working or coating operations are performed and no weight increases occur. By means of a controlled arrangement of the first layers 6 of fibers in contact with the spindle 5 (first layers 6 which have, for example particularly high hardness and gliding characteristics), it is also possible to obtain internal surfaces of the element 1 (and therefore steps 4a, 4b,...) that have different surface hardness or gliding characteristics.

The spindle 5 can undergo surface treatments (for example mechanical, chemical, thermal treatments or a combination thereof) in order to render its surface substantially uneven. The outer surface of the spindle 5, therefore, can be rough (by means of microscopic deviations of the actual surface with respect to the nominal surface): these microscopic deviations with respect to the nominal surface in fact are reflected in the internal surface of the element 1, which is provided by means of the spindle 5. The internal surface therefore has a certain surface roughness, ensuring that when the fishing line inside it is taut (flexing the element 1), the contact between the line and the internal surface is exclusively in points, in order to maximize gliding.

The element 1 is constituted by a single element, which is open at the exit ends, or is constituted by a plurality of fishing rod elements, which can be mutually assembled to form the rod and are open at the line passage ends. To give a practical numerical example, reference can be made to a fishing rod element that has a length of 115 centimeters, a diameter comprised between 0.8 and 3.5 mm, and an axial length of the cylindrical portions of 25 mm and a step height of 0.05 mm.

For fishing rods of the Roubaisienne type, the fishing line is connected to a portion made of a material such as an elastic, which has high extensibility characteristics and slides inside the element 1 according to the invention. The elastic can stretch until it is six times longer than its length at rest, and the standard practice is to use pieces of elastic approximately 2 m long inside the rod.

Alternatively, for fishing rods of the type with a reel, the fishing line, made of a polymeric material having high tensile strength characteristics, can be constituted by a plurality of fine braided filaments or by a single filament: in both cases, the line slides inside the element 1.

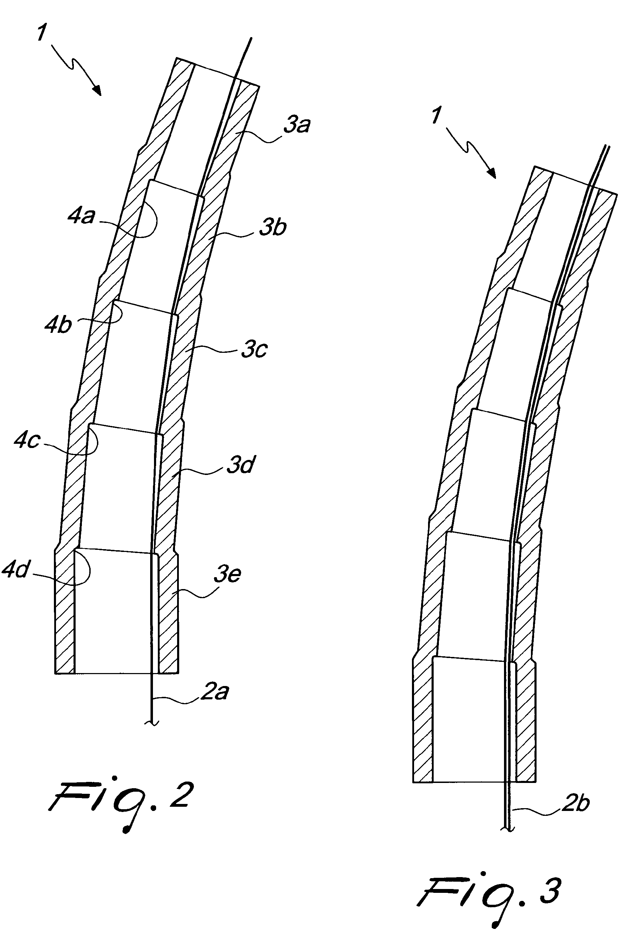

The operation of the invention is as follows: when the fishing line is pulled by the fish so as to flex the rod downward (Figures 1 and 2), the portion of line inside the element 1 does not slide along its entire length against the internal surface of said rod but only touches the points that correspond to the edges of the successive internal steps.

It has thus been shown that the invention achieves the proposed aim and object.

The invention thus conceived is susceptible of numerous modifications and variations, all of which are within the scope of the appended claims.

For example, the height of each individual step 4a, 4b... can be changed axially along the element 1 (without altering the maximum height limit of 0.6 mm for the step 4) depending on the intended taper. This solution can be used both when the axial length of the portions 3a, 3b... is constant and when the axial length increases or decreases as the diameter of the portions 3a, 3b.... increases.

All the details may further be replaced with other technically equivalent ones.

In the embodiments that follow, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

In practice, the materials used, as well as the shapes and dimensions, may be any according to requirements without thereby abandoning the protective scope of the appended claims.

The disclosures in Italian Patent Application No. BO2003A000656 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A carbon fiber fishing rod element crossed slidingly by a portion of line (2) of any type, **characterized in that** its internal surface converges toward the end where the line (2) exits and is constituted by a succession of slightly frustum-shaped portions (3a, 3b, 3c...), which gradually decrease in diameter, forming a plurality of steps (4a, 4b, 4c...) inside the element (1), against which the fishing line (2) slides when the rod is flexed downward, said fishing line being tensioned between the steps (4a, 4b), making contact in points instead of along the entire length of said cylindrical portions (3a, 3b, 3c...).

2. The element according to claim 1, **characterized in that** said frustum-shaped portions are tapered.

3. A method for providing a fishing rod element according to claim 1, comprising the steps of: winding in succession, on a frustum-shaped spindle (5), a plurality of layers (6a, 6b, 6c) of carbon fibers preimpregnated with thermosetting resins in which the fibers are orientated differently in order to mutually cross the layers (6a, 6b, 6c) of fibers and achieve the intended mechanical characteristics of the element (1); bringing said spindle (5), with said layers (6a, 6b, 6c) wound on it in the intended number and directions in order to provide sought strength and lightness characteristics, to a polymerization temperature of said resin for a preset time, and removing the layers (6a, 6b, 6c) of resin thus bonded by extracting said frustum-shaped spindle (5), said spindle (5) being no shorter than, and substantially as long as, the length of the rod element (1) that it has to provide, **characterized in that** said spindle (5) has an outer surface that is constituted almost entirely by a succession of substantially cylindrical portions (7a, 7b, 7c...), whose axial length depends on the length of the element to be provided and on the variation in diameter between two successive portions (7a, 7b), the difference in inside diameter between the two ends of the rod element (1) being distributed by successive steps among the successive cylindrical portions (7a, 7b, 7c...).

4. The method according to claim 3, **characterized in that** said spindle (5) has a taper that can vary along its own axis of symmetry, in order to provide rod elements (1) that also have an axially variable taper and have the dynamic action required for the type of fishing rod for which they are intended.

5. The method according to claim 3, **characterized in that** said substantially cylindrical portions (7a, 7b, 7c...) have substantially the same length and are provided, starting from the smaller-diameter end of said spindle (5) up to the vicinity of the larger-diameter end, in order to provide elements that have a bottom, i.e., the part that can be assembled to form the rod, in which the internal surface has no steps.

6. The method according to claim 3, **characterized in that** said substantially cylindrical portions (7a, 7b, 7c...) have a length that substantially increases as their diameter increases.

7. The method according to claim 3, **characterized in that** said substantially cylindrical portions (7a, 7b, 7c...) have a length that substantially decreases as their diameter increases.

8. The method according to claim 3, **characterized in that** the outer surface of said spindle (5) has a low roughness, said roughness being imparted to the internal surface of each one of said elements (1) provided by means of said spindle in order to increase its gliding.

9. The method according to claim 3, **characterized in that** said steps (4a, 4b, 4c...) are obtained during the formation of said element (1), without performing successive working and coating operations and without producing weight increases.

10. The method according to claim 3, **characterized in that** said steps (4a, 4b, 4c...) are constituted by a winding of a ribbon of polymeric material on the internal surface of said element.

11. The element according to claim 1, **characterized in that** it is constituted by a single element that is open at the exit ends.

12. The element according to claim 1, **characterized in that** it is constituted by a plurality of rod elements (1), which can be mutually assembled in succession to form the rod and are open at the ends where the line (2) passes.

13. The element according to claim 1, **characterized in that** for fishing rods of the Roubaisienne type, said fishing line (2) is made of a material such as elastic, with high extensibility characteristics.

14. The element according to claim 1, **characterized in that** for fishing rods of the type equipped with a reel, said fishing line is made of a material with high tensile strength characteristics.

15. The element according to claim 14, **characterized in that** said fishing line is constituted by a plurality of braided polymer filaments.

16. The element according to claim 14, **characterized in that** said fishing line is constituted by a monofilament made of a material known by the trade-name Nylon.

17. The element according to claim 1, **characterized in that** said steps (4a, 4b, 4c...) have a height of no more than 0.6 mm.

18. The element according to claim 17, **characterized in that** said steps (4a, 4b, 4c...) have a height of substantially 0.05 mm.

19. The element according to claim 1, **characterized in that** said steps (4a, 4b, 4c...) have a sharp edge.

20. The element according to claim 1, **characterized in that** said steps (4a, 4b, 4c...) have a beveled edge.

21. The element according to claim 1, **characterized in that** said steps (4a, 4b, 4c...) have a rounded edge.

22. The element according to claim 1, **characterized in that** layers (6a, 6b, 6c...) of fibers are deposited on a frustum-shaped spindle (5) so that they are mutually superimposed with different fiber orientations.

23. The element according to claim 22, **characterized in that** said layers (6a, 6b, 6c...) have a thickness of less than 0.25 mm.

24. The element according to claim 1, **characterized in that** said steps (4a, 4b, 4c...) have a height that varies along the axial direction of said element (1).
